# FASCICULE DE BREVET EUROPEEN

(11) **EP 1 826 595 B1**
(45) Date de publication et mention de la délivrance du brevet: **21.10.2015**
(21) Numéro de dépôt: 07290194.5
(22) Date de dépôt: 15.02.2007
(51) Int. Cl.: G02B 5/30, G02B 1/08, G02C 7/12

(54) **Procédé de réalisation d'un élément optique polarisant.**
Verfahren zur Herstellung eines polarisierenden optischen Elements
Method of manufacturing a polarising optical element.

(30) Priorité: 23.02.2006 FR 0601612
(43) Date de publication de la demande: 29.08.2007
(73) Titulaire: ESSILOR INTERNATIONAL (COMPAGNIE GENERALE D'OPTIQUE), 94220 Charenton-le-Pont (FR)
(72) Inventeur: Begon, Cédric, c/o Essilor International, 94220 Charenton le Pont (FR); Defranco, Christelle, c/o Essilor International, 94220 Charenton le Pont (FR); Lesarte, Noémie, c/o Essilor International, 94220 Charenton le Pont (FR); Rychel, Dominique, c/o Essilor International, 94220 Charenton le Pont (FR)
(74) Mandataire: Cabinet Plasseraud

(56) Documents cités:
- EP-A- 1 593 990
- EP-A2- 1 426 168
- JP-A- 2005 049 865
- US-A- 2 524 286
- US-A1- 2004 125 335
- US-B1- 6 630 289

## Description

La présente invention concerne un procédé de réalisation d'un élément optique polarisant, ainsi qu'un élément optique obtenu par ce procédé. Elle concerne encore une structure en couches utile pour réaliser un tel élément optique polarisant.

Les bénéfices des éléments optiques polarisants, et tout particulièrement des lentilles ophtalmiques polarisantes, sont bien connus. En particulier, de tels éléments peuvent supprimer du champ de vision des réflexions parasites qui proviennent de surfaces planes ou quasi-planes horizontales. Ce type de lentilles, par exemple, est obtenu de façon classique dans l'industrie ophtalmique à l'aide d'un film polarisant. Le matériau le plus classiquement utilisé pour fabriquer des films polarisants est le PVA (Polyvinyl Alcool). Pour les applications ophtalmiques, le film de PVA est utilisable seul ou pris en sandwich entre deux films de protection de façon à former un film composite moins délicat, par exemple entre deux films de Polycarbonate.

La lentille ophtalmique polarisante est alors obtenue selon deux voies classiques dans l'industrie :
Par surmoulage, en positionnant précisément le film polarisant dans un moule avant coulée d'un monomère thermodurcissable. Après polymérisation, le film se trouve incorporé de façon définitive dans le volume du substrat de la lentille ophtalmique. Les films de PVA seul sont utilisés pour cela.
Par injection, en positionnant le film polarisant à la surface d'un insert avant injection d'un polymère thermoplastique. Une telle technique n'est possible que si la face du film polarisant en contact avec le polymère injecté est un matériau thermoplastique compatible, c'est-à-dire apte à fusionner avec le matériau injecté pour donner un assemblage durable. Elle s'applique notamment à des films composites qui sont des empilements à base d'un film de PVA positionné entre deux films de protection, et qui peuvent être thermoformés avant d'être positionnés dans l'insert. En outre, le film de protection qui recouvre le film polariseur du côté opposé à l'élément optique en matériau injecté ne doit pas présenter de biréfringence importante car, dans ce cas, l'efficacité de polarisation de l'élément optique qui est finalement obtenu peut être réduite. Ceci limite la variété de film polariseur pouvant être mise en oeuvre dans ce type de procédé.

Dans les deux procédés, surmoulage et injection, le chauffage du film polarisant provoque une altération de celui-ci. En particulier, sa couleur et son efficacité de polarisation sont modifiées involontairement et de façon peu reproductible. En outre, il est difficile d'empêcher que des déplacements incontrôlés du film polarisant ne se produisent pendant le surmoulage.

Enfin, le procédé par surmoulage ne permet pas d'obtenir un élément optique qui présente une épaisseur totale réduite optimisée. Ceci est particulièrement gênant pour les matériaux à haut indice de réfraction.

Un but de la présente invention consiste donc à proposer un procédé de réalisation d'un élément optique polarisant, qui ne présente pas les inconvénients cités ci-dessus.

Pour cela, l'invention propose un procédé de réalisation d'un élément optique polarisant, suivant lequel une structure en couches est appliquée sur une surface d'un élément optique de base. La structure comprend une première couche d'orientation, qui comprend elle-même un réseau de polymères photo-orientés. Elle comprend en outre une seconde couche polarisante, qui comprend à son tour des polymères à cristaux liquides et au moins un colorant dichroïque, ceux-ci ayant une orientation angulaire qui est déterminée par la première couche. Le procédé comprend les étapes suivantes :
/a/ réaliser la structure en couches sur un support temporaire ;
/b/ retirer la structure en couches du support temporaire, de façon à obtenir la structure sous forme d'une membrane auto-supportée ; et
/c/ appliquer la structure en couches sur la surface pseudo-sphérique de l'élément optique de base.

Au sens de l'invention, par surface de l'élément optique de base, on entend l'ensemble de la surface de cet élément ou au moins une partie de sa surface. Selon l'invention cette surface de l'élément optique de base est pseudo-sphérique.

Dans le cadre de l'invention, on entend par surface pseudo-sphérique une surface concave ou convexe continue, c'est-à-dire une surface qui est dépourvue de trous ou de marches. De telles surfaces pseudo-sphériques sont notamment rencontrées lorsque l'élément optique est une lentille optique. En général, au moins l'une des deux faces d'une lentille optique est pseudo-sphérique, de sorte que la variation d'épaisseur de la lentille qui en résulte lui confère un pouvoir optique. Des lentilles ophtalmiques afocales, unifocales, bifocales, trifocales et progressives ont toutes au moins une face pseudo-sphérique. Une surface sphérique correspond à un cas particulier de surface pseudo-sphérique, pour lequel des rayons de courbure de la surface selon deux directions perpendiculaires sont égaux et uniformes. Dans la suite, l'expression «surface pseudo-sphérique» est entendue comme incluant le cas particulier des surfaces sphériques.

Ainsi, la structure en couches, qui confère la fonction polarisante à l'élément optique, est d'abord réalisée sur un support temporaire, puis séparée de celui-ci et appliquée sur l'élément optique de base. Cette séquence est rendue possible grâce au fait que la structure en couches est suffisamment cohésive pour être manipulée isolément, c'est-à-dire sans être soutenue par aucun support. Les propriétés mécaniques et physico-chimiques du support temporaire n'interviennent donc pas lors de l'application de la structure en couches sur l'élément optique de base. Cette application peut donc être réalisée simplement, en ne prenant en compte que le comportement mécanique de la structure en couches, sans tenir compte de celui du support temporaire.

Un premier avantage d'un procédé selon l'invention réside dans la possibilité de réaliser un élément optique polarisant dont l'épaisseur est optimisée. En effet, la structure en couches est simplement appliquée sur une surface de l'élément optique, ce qui n'augmente pas notablement l'épaisseur de celui-ci.

Un second avantage d'un procédé selon l'invention réside dans le fait que la structure en couches peut être produite sur le support temporaire sous forme d'un film continu. Une quantité importante de la structure en couches peut ainsi être fabriquée de façon économique, par circulation du support temporaire à travers des sections de fabrication successives. La structure, une fois désolidarisée de son support, peut ensuite être découpée en segments qui sont appliqués individuellement sur des éléments optiques distincts. Alternativement, la structure peut être appliquée dans son intégralité en une seule fois sur plusieurs éléments distincts, puis les éléments peuvent être séparés les uns des autres par la suite.

Un troisième avantage selon l'invention est que la production du film polarisant est totalement détachée de la production de l'élément optique. Ceci est particulièrement intéressant pour le secteur des lentilles ophtalmiques.

Un quatrième avantage selon l'invention est lié au fait que l'application de la structure en couches à propriété polarisante sur la surface d'un élément optique déjà constitué permet de faire épouser parfaitement le profil de la surface réceptrice à la structure polarisante, avec ainsi un très bon contrôle de la distance séparant la surface de la structure en couches de la surface de l'élément optique. Ceci est particulièrement bénéfique pour garantir des propriétés dioptriques particulières pour l'élément optique polarisant finalement obtenu, notamment dans le cas où l'élément optique polarisant est une lentille ophtalmique de type lentille progressive, dont le rayon de courbure varie continûment sur sa surface.

Un cinquième avantage du procédé selon l'invention provient du fait que le support temporaire peut être récupéré après que la structure en couches a été séparée de celui-ci à l'étape /b/. Eventuellement, le support récupéré peut être réutilisé pour fabriquer une nouvelle portion de structure en couches.

Selon l'invention, l'étape /a/ du procédé comprend les sous-étapes suivantes :
/a1/ former, sur le support temporaire, une première couche de polymères photo-orientables, qui présentent des groupes photo-réactifs ;
/a2/ polymériser la première couche sous un premier rayonnement ultraviolet polarisé linéairement, de façon à réaliser un réseau de polymère photo-orienté selon une direction qui est imposée par la direction de polarisation de ce premier rayonnement ultraviolet ;
/a3/ former, sur cette première couche, une seconde couche qui comprend un mélange des colorants dichroïques avec au moins un cristal liquide monomérique réticulable, ceux-ci étant orientés angulairement par la première couche ; et
/a4/ polymériser au moins en partie les cristaux liquides monomériques de la seconde couche, de façon à fixer les colorants dichroïques dans l'orientation angulaire déterminée par la première couche.

La polarisation linéaire du premier rayonnement ultraviolet peut être réalisée au moyen d'un polariseur qui est intercalé entre une source de ce premier rayonnement et la première couche.

Lors de la sous-étape /a2/, la réaction, sous l'effet du rayonnement polarisé, des groupes photo-réactifs qui sont portés par le polymère photo-orientable conduit à la formation d'un réseau de polymère anisotrope, orienté selon la direction du polariseur.

Dans la seconde couche du système polarisant, les cristaux liquides monomériques et les colorants dichroïques peuvent adopter, lors de l'étape /a3/, une orientation qui est perpendiculaire à la direction du polariseur, qui a été imposée au polymère photo-orientable de la première couche. Cette orientation des colorants dichroïques confère au système les propriétés de polarisation de la lumière visible. La polymérisation des cristaux liquides monomériques, à l'étape /a4/, stabilise ensuite définitivement la configuration de la seconde couche.

Selon l'invention, la polymérisation de la seconde couche à la sous-étape /a4/ est réalisée en utilisant une dose d'un second rayonnement ultraviolet qui est ajustée de sorte que la seconde couche possède une température de transition vitreuse inférieure ou égale à la température ambiante. Il est entendu que la température ambiante considérée peut varier de plus ou moins 5°C. En général, elle est proche de 25°C. Autrement dit, la quantité du rayonnement ultraviolet qui est utilisée à la sous-étape /a4/ permet de sélectionner un degré de polymérisation de la seconde couche, et par conséquent d'ajuster ses propriétés thermomécaniques. Ainsi, une sous-polymérisation aboutit à une seconde couche qui présente une température de transition vitreuse (Tg) qui est inférieure à celle qui serait obtenu à l'issue d'une polymérisation complète. On entend par sous-polymérisation une polymérisation partielle, avec un degré de polymérisation tel qu'une partie des fonctions polymérisantes de la seconde couche n'a pas encore réagi. De telles fonctions polymérisantes peuvent être, notamment, des fonctions acrylate ou méthacrylate. Selon l'invention, la dose de second rayonnement ultraviolet doit être suffisamment élevée pour que le point de gel chimique du polymère en croissance soit atteint, tout en restant suffisamment faible pour que la température de transition vitreuse du matériau final de la seconde couche soit adaptée par rapport à la température de mise en oeuvre de la structure en couches:

Lorsque la dose d'irradiation de la seconde couche est telle que le matériau qui est obtenu après l'étape de pré-polymérisation a une température de transition vitreuse inférieure à la température ambiante, ce matériau possède, à température ambiante, des propriétés mécaniques qui permettent de le manipuler et de l'appliquer facilement sur l'élément optique de base.

Avantageusement, la seconde couche possède une épaisseur comprise entre 3 et 100 µm (micromètre), préférentiellement entre 5 et 50 µm, et plus particulièrement entre 5 et 10 µm. Dans ces conditions, la seconde couche peut conférer à l'ensemble de la structure en couches une cohésion mécanique suffisante pour que la structure puisse être manipulée sous forme d'une membrane auto-supportée, notamment pour l'étape /c/.

Parmi les polymères réactifs photo-orientables utilisables dans le cadre de l'invention on peut citer à titre indicatif, ceux étant formé à partir de polymère acrylique, methacrylique, de polyimides, et de dendrimères. Les polymères réactifs photo-orientables présentant des groupes photoréactifs tels que acide cinnamique et ses dérivés, chalcones, coumarines, ou des ponts méthacrylates sont particulièrement envisageables.

Parmi les colorants dichroïques utilisables dans le cadre de l'invention on peut citer à titre indicatif, les azométhines, les indigoïdes, les thioindigoïdes, les indanes, les quinophtaloniques, les perylènes, les phtalopérines, les triphenodioxazines, les indoloquinoxalines, les imidazotriazines, les colorants azo et polyazo, les benzoquinones, les naphtoquinones, les anthraquinones et (poly)anthraquinones, les anthrapyrimidinones, les iodines et les iodates. Avantageusement les azos colorants et les anthraquinones sont utilisés dans le cadre de l'invention.

La structure en couches peut être appliquée à l'étape /c/ sur la surface de l'élément optique de base avec une portion d'un matériau adhésif disposée entre la structure et cet élément. Une telle utilisation d'un matériau adhésif permet de mettre en oeuvre un procédé selon l'invention pour des éléments optiques de base qui ont des compositions chimiques différentes, au niveau de la surface sur laquelle la structure en couches est appliquée. Ce matériau adhésif, dans le cadre de l'invention peut être appliqué sur une face de l'élément optique et/ou sur la structure en couche. De préférence, avant l'étape /c/, la portion de matériau adhésif est disposée sous forme d'une couche supplémentaire de la structure en couches sur un côté de ladite structure. Avec une telle couche de matériau adhésif, la structure en couches contient tous les composants nécessaires pour apporter une fonction polarisante à un élément optique quelconque. Il suffit donc de se procurer la structure en couches pour réaliser un élément optique polarisant à partir d'un élément optique simple.

Parmi les matériaux adhésifs utilisables dans le cadre de l'invention, on peut citer à titre indicatif et non limitatif : les adhésifs époxydes, les adhésifs polyuréthanes réactifs; les colles thermodurcissables; les adhésifs à base de monomères polymérisables tels que les adhésifs cyanoacrylates; les adhésifs acryliques structuraux ou acryliques modifiés; les adhésifs "hot melts" ou thermofusibles; les plastisols PVC (polychlorure de vinyle); les adhésifs élastomères, colle contact au néoprène; les colles émulsions vinyliques et copolymères; les adhésifs sensibles à la pression (PSA); les colles à l'eau.

Selon un mode de réalisation de l'invention, l'utilisation d'une couche de matériau adhésif sensible à la pression, ou PSA pour «Pressure Sensitive Adhesive» en anglais, est particulièrement avantageuse car elle permet de coller sur la surface de l'élément optique de base la structure en couche de façon simple et peu coûteuse, tout en préservant les propriétés dioptriques de l'élément optique.

De plus, la possibilité de déposer le matériau adhésif PSA sous forme d'une couche fine à faces parallèles dont l'épaisseur peut être comprise entre 0,5 et 200 microns permet, lorsque l'élément optique de base est une lentille ophtalmique, de ne pas altérer sa puissance nominale quelle que soit la zone spatiale concernée de l'élément optique. De cette façon, le collage du film polariseur est compatible avec la précision qui est nécessaire lorsque l'élément optique de base est une lentille ophtalmique progressive.

L'utilisation d'un matériau adhésif sensible à la pression ne nécessite pas d'utiliser une irradiation, par exemple par un rayonnement ultraviolet, ni un chauffage intensif pour obtenir un collage permanent. Ainsi, la structure en couche polarisante n'est pas altérée ni dégradée par une telle irradiation ou chauffage.

L'invention propose aussi une structure en couches qui est adaptée pour être utilisée dans un procédé tel que décrit précédemment. Une telle structure comprend :
- une première couche d'orientation, qui comprend un réseau de polymères photo-orientés ; et
- une seconde couche polarisante sous-polymérisée, qui comprend au moins un colorant dichroïque et une matrice d'au moins un cristal liquide monomérique réticulable, adaptée pour fixer une orientation angulaire des colorants dichroïques.

Les colorants dichroïques ont une orientation angulaire qui est déterminée par la première couche de façon à produire un effet polarisant de la seconde couche pour une lumière transmise à travers la structure. Cette orientation est fixée définitivement en incorporant les colorants dichroïques au sein de la matrice de cristaux liquides monomériques réticulables.

En outre, les première et seconde couches sont adaptées pour former une membrane auto-supportée.

Une telle structure en couches peut être disposée sur un support, de façon à pouvoir être séparée de ce dernier. II peut s'agir d'un support utile lors de la fabrication de la structure. De plus il peut servir à conditionner la structure entre la fabrication de celle-ci et son utilisation ultérieure avec un élément optique.

La structure en couches peut comprendre en outre une couche de matériau adhésif. La portion de matériau adhésif est disposée sous forme d'une couche supplémentaire de la structure en couches Elle peut comprendre encore au moins une autre couche fonctionnelle, destinée à apporter une fonction supplémentaire à l'élément optique, en même temps que la fonction de polarisation.

L'invention propose enfin un élément optique polarisant qui comprend un élément optique de base et une structure en couches telle que décrite ci-dessus. Cette structure en couches est fixée sur une surface pseudo-sphérique de l'élément optique de base par une couche d'un matériau adhésif disposée entre l'élément de base et la structure en couches. Elle confère à l'élément optique une fonction polarisante pour une lumière transmise à travers cet élément.

D'autres particularités et avantages de la présente invention apparaîtront dans la description ci-après d'exemples de mise en oeuvre non limitatifs, en référence aux dessins annexés, dans lesquels :
- les figures 1a et 1b sont des vues en coupe d'une structure en couches portée par un support et isolée de celui-ci, respectivement, telle qu'utilisée dans une mise en oeuvre de la présente invention ;
- la figure 2 illustre le principe d'une unité de production d'une structure en couches conforme aux figures 1a et 1b ;
- la figure 3 est une vue en coupe d'un élément optique de base pouvant être utilisé pour mettre en oeuvre l'invention ; et
- les figures 4a et 4b sont des vues en coupe respectives de deux dispositifs utilisés pour mettre en oeuvre l'invention.

Pour raison de clarté des figures, les dimensions des éléments représentés ne sont pas en proportion avec des dimensions ou des rapports de dimensions réels. En outre, des références identiques dans des figures distinctes désignent des éléments identiques, ou qui ont des fonctions identiques.

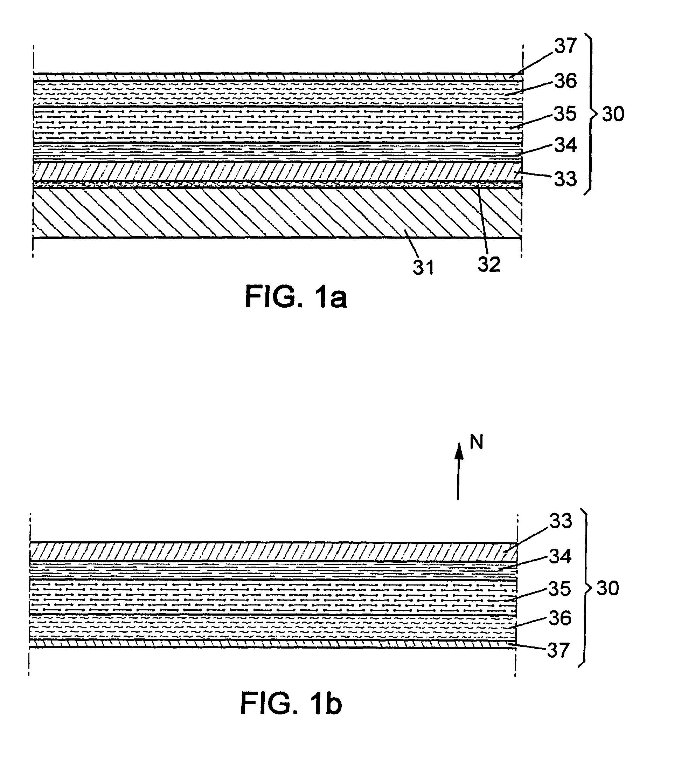

Conformément à la figure 1a, une structure en couches 30 est portée par un support 31. Le support 31 est choisi parmi les matériaux ayant une énergie de surface qui est comprise entre 25 mN/m (milliNewton par mètre) et 40 mN/m. Parmi ces matériaux on peut citer à titre indicatif, et non limitatif, les poly(éthylène) branchés ou linéaires, les poly(éthylène-stat-acide acrylique) dont le pourcentage en mole d'acide acrylique est inférieur ou égal à 2%, les poly(éthylène-stat-polypropylène), les poly(éthylène-stat-acétate de vinyl), les poly(isobutène), les poly(isoprène), les poly(4-méthyl-1-pentène), les poly(propylène), les poly(2-methylstyrène), les poly(styrène), les poly(styrène-stat-acylonitrile), les poly(styrène-stat-2,2,3,3-tétrafluoropropyl métharcrylate), les poly(chlorotrifluoroethylène), les poly(chlorotrifluoroéthylène-stat-tetrafluoroéthyène), les poly(tetrafluoroethylène-stat-ethylène), les poly(trifluoroethylène), les poly(vinyl chloride), les poly(vinyl fluoride), les poly(vinylidène fluoride), les poly(vinyl acétate), les poly(vinyl(alkyl)oate), les poly(vinyl alcool), les poly(vinyl butyral), les poly(vinyl éthyl éther) les poly(vinyl méthyl éther), les poly(vinyl formal), les poly(n-butyl acrylate), les poly(éthyl acrylate), les poly(2-éthylhexyl acrylate), les poly(benzyl méthacrylate), les poly(alkyl méthacrylate), les poly(phényl méthacrylate), , les polyamides, les polyuréthane, les cellulosique.

D'une façon avantageuse, le support 31 est en polyéthylène ou en polypropylène, lesquels matériaux présentent des énergies de surfaces respectives d'environ 35 mN/m et 30 mN/m.

De préférence, le matériau du support 31 présente une énergie de surface assez faible, de sorte que la structure en couches 30 puisse être aisément séparée du support 31, par exemple par pelage. Eventuellement, une couche intermédiaire 32 est réalisée entre le support 31 et la structure 30, pour faciliter une séparation entre la structure 30 et le support 31. Une telle couche intermédiaire 32 est appelée couche de pelage et peut comprendre, en particulier, un composé tensio-actif à base de silicone.

La figure 1b représente la structure en couches 30, après qu'elle a été séparée du support 31. Pour cette raison, le support 31 est appelé support temporaire. Il est utilisé pour réaliser la structure en couches 30, puis est retiré avant que la structure 30 soit appliquée sur un élément optique.

Dans le mode de mise en oeuvre de l'invention qui est décrit ici, la structure en couches 30 comprend cinq couches élémentaires, référencées 33 à 37.

La couche 33, qui est formée en premier sur le support 31 ou par dessus la couche de pelage 32, est destinée à conférer une fonction spécifique à l'élément optique sur lequel la structure 30 sera transférée. Ce peut être, par exemple, une couche de protection contre un rayonnement UV, une couche barrière à l'oxygène, une couche anti-abrasion, une couche anti-choc, un revêtement antireflet, un revêtement anti-statique ou un revêtement antisalissure. Eventuellement, la couche 33 peut être une combinaison de plusieurs des couches ou revêtements précédents. La couche 33 fait alors partie de la structure 30 qui est destinée à être séparée du support 31, pour former une membrane auto-supportée selon l'invention. La couche 33 peut notamment permettre de renforcer les propriétés mécaniques de la structure en couche (34, 35) et faciliter ainsi sa manipulation en tant que membrane auto-supportée.

La couche 34, qui est située sur la couche 33 au sein de la structure 30, est formée d'un réseau de polymère anisotrope qui induit une orientation des composés de la couche 35. Des colorants dichroïques qui sont incorporés dans la couche 35 ont ainsi une orientation qui est déterminée par la couche 34. II en résulte un effet polarisant macroscopique de la structure 30, pour un faisceau lumineux qui traverse celle-ci. De façon connue, l'effet polarisant de la structure 30 est d'autant plus important que la répartition des orientations angulaires des colorants dichroïques dans la couche 35 est resserrée autour de la direction déterminée par la couche 34.

La couche 34 comprend des polymères photo-orientables présentant des groupes photo-réactifs, qui, après réaction sous lumière polarisée linéairement, forment un réseau de polymère anisotrope orienté selon la direction du polariseur. Par exemple, la couche 34 est formée sur le support 31, déjà muni des couches 32 et 33, à partir de polymères portant des groupements photo-réactifs acide cinnamique. Ce polymère est dissous par exemple dans un solvant de méthyl-éthyl-cétone, de cyclohexanone ou dans un mélange de ces deux derniers solvants. L'énergie de surface du matériau sur lequel est formée la couche 34 est ajustée de façon à obtenir une couche 34 continue et d'épaisseur régulière. Le solvant est ensuite évaporé, par exemple au moyen d'un rayonnement infrarouge ou par passage dans une étuve, et la couche 34 est polymérisée sous l'effet d'un rayonnement de type UV-B. Pour provoquer une polymérisation de la couche 34 sous forme d'un réseau de polymère photo-orienté, le rayonnement UV-B qui est utilisé est polarisé linéairement par un polariseur. Ce rayonnement peut avoir une énergie qui est comprise entre 5 et 300 mJ/cm² (milliJoule par centimètre-carré), par exemple.

La couche 35 est ensuite formée sur la couche 34 à partir d'un mélange de cristaux liquides monomériques réticulables et de colorants dichroïques répartis dans un solvant. Eventuellement, les colorants dichroïques peuvent être sélectionnés pour conférer une coloration à la structure, et, ultérieurement, pour conférer à l'élément optique final une fonction de filtre solaire. Les cristaux liquides monomériques et les colorants dichroïques de la couche 35 sur la couche 34 peuvent être mélangés à un solvant tel que la cyclohexanone par exemple. La couche 35 est chauffée puis polymérisée sous l'effet d'un rayonnement UV-A. Lors du chauffage, les cristaux liquides monomériques prennent une orientation qui est déterminée par l'orientation du réseau de polymères photo-orientés de la couche 34 et qui est perpendiculaire à celle-ci. La température de chauffage peut par exemple être de 87°C. Naturellement l'étape de chauffage et de séchage peuvent être réalisées au sein d'une même étape du procédé globale. La température de chauffage va fortement dépendre du type de cristaux liquide utilisé. Lors de cette étape il ne faut pas dépasser la température de clarification des cristaux liquides. Au-delà de cette température les cristaux liquides ne sont plus orientés suivant une direction privilégiée.

L'épaisseur de la couche 34 peut être comprise entre 50 et 200 nm (nanomètre), et est préférentiellement égale à 140 nm environ. L'épaisseur de la couche 35 peut être comprise entre 3 et 100 µm (micromètres), préférentiellement entre 5 et 50 µm, et avantageusement entre 5 et 10 µm. Dans ces conditions, le comportement mécanique de la structure 30 est principalement procuré par la couche 35. Pour obtenir un comportement mécanique adapté à la mise en oeuvre de l'invention, l'énergie du rayonnement de polymérisation de la couche 35 est de préférence comprise entre 0,3 et 1,5 J (Joule), voire entre 0,35 et 0,8 J. En particulier, lorsque l'énergie du rayonnement est sensiblement égale à 0,4 J, la couche 35 qui est obtenue possède une température de Tg inférieure à 25°C. La structure 30 présente une cohésion mécanique qui permet de la manipuler séparément du support 31, sans la déchirer.

Les couches 34 et 35 (et optionnellement 33) peuvent être formées sur le support 31 par centrifugation (spin-coating), par roll-coating ou par spray-coating,

La structure 30 peut encore comprendre une couche d'un matériau adhésif 36. Ce peut être une couche à base d'époxy, à base d'un latex, notamment à base de polyuréthane, ou en un matériau adhésif sensible à la pression, ou PSA pour «Pressure Sensitive Adhesive» en anglais. Elle possède de préférence une épaisseur constante, afin de ne pas modifier ultérieurement une puissance optique de l'élément optique.

Optionnellement, la couche de matériau adhésif 36 peut être recouverte d'une pellicule 37, ou «liner» en anglais, destinée à être retirée pour découvrir la surface adhésive de la couche 36 avant que la structure 30 soit appliquée sur l'élément optique.

La couche 36 peut aussi être formée par spin-coating sur les couches 33-35, portées par le support 31. Leur formation est considérée connue par l'Homme du métier, et n'est pas reprise ici en détail.

Alternativement, il est possible de se procurer la couche 36 associée initialement avec la pellicule 37, d'une façon indépendante des autres couches de la structure 30. La couche 36 ainsi conditionnée est appliquée sur la couche 35 par pression au travers de la pellicule 37. Une configuration identique de la structure 30 peut être obtenue de cette façon.

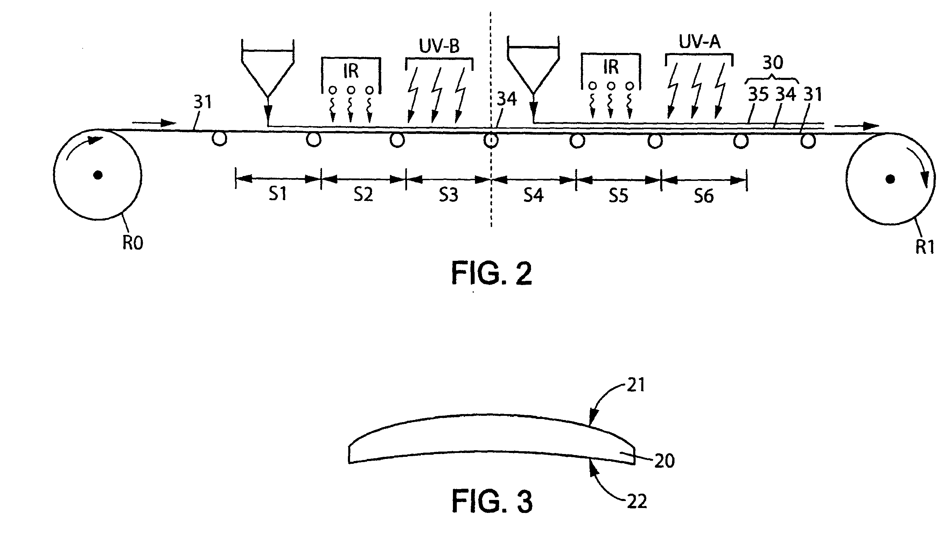

Selon un mode de réalisation préféré de la structure en couches 30, celle-ci est produite en continu sur un support 31 en forme de film (feuille). Dans ce cas, une installation de production telle que représentée sur la figure 2, peut être utilisée. Le support 31 est déroulé d'une bobine d'alimentation R0, puis enroulée de nouveau sur une bobine de conditionnement R1. L'installation comporte plusieurs sections disposées entre les bobines R0 et R1, pour former en continu les couches 34 et 35 (optionnellement 33), notamment. En particulier, une première partie de l'installation peut comprendre des sections S1-S3 pour déposer en continu la solution précurseur de la couche 34 sur le support 31 (section S1), pour la chauffer (section S2), par exemple au moyen d'une source de rayonnement infrarouge disposée au dessus du support 31, puis pour la polymériser par irradiation UV-B polarisé linéairement (section S3). De même, une seconde partie de l'installation peut comprendre des sections S4-S6, respectivement pour déposer (section S4), chauffer (section S5) et polymériser (section S6) la couche 35. Une telle installation permet de produire rapidement et de façon particulièrement économique une structure en couches 30 portée par le support 31. Le support 31 muni de la structure 30, sous forme d'un film continu, peut alors être de nouveau déroulé de la bobine R1, et découpé en segments destinés à être appliqués sur des éléments optiques distincts.

Une telle installation de production en continu de la structure en couches 30 peut comprendre des sections supplémentaires non représentées sur la figure 2, pour exécuter des étapes additionnelles de fabrication. Elle peut comprendre notamment une ou plusieurs sections de formation de la couche de pelage 32 et/ou de la couche fonctionnelle 33. De telles sections sont disposées entre la bobine d'alimentation R0 et la section S1. Le solvant utilisé pour déposer la couche de pelage 32 peut être du n-propanol, lorsque cette couche comprend des composés de silicone. L'installation de production de la structure 30 peut aussi comprendre des sections supplémentaires disposées entre la section S6 et la bobine de conditionnement R1, pour former la couche de matériau adhésif 36 et, éventuellement, la pellicule amovible 37. L'installation de production peut optionnellement comprendre des sections de laminages avant la section S1 et/ou après la section S6.

A titre d'illustration, l'invention est décrite dans le cadre de l'application de la structure à couches précédente sur une lentille ophtalmique qui constitue l'élément optique de base. Il est entendu qu'elle peut être mise en oeuvre de façon similaire avec d'autres éléments optiques, tels que, notamment, un élément d'instrument de visée, un élément d'instrument de mesure ou une visière de casque.

Conformément à la figure 3, une lentille ophtalmique 20 présente une surface convexe 21 et une surface concave 22. Elle peut être en matériau minéral ou organique, en particulier en un matériau organique à indice de réfraction élevé. Dans le cadre de l'invention, on entend par indice de réfraction élevé un indice supérieur ou égal à 1,60, pouvant être égal à 1,67, par exemple. L'utilisation d'un tel matériau à indice de réfraction élevé pour la réalisation d'une lentille correctrice d'amétropie est particulièrement avantageuse, puisque la lentille peut alors présenter une épaisseur réduite et une courbure moindre, pour une puissance optique identique. Un poids inférieur de la lentille en résulte, qui procure un confort supérieur au porteur. En particulier, une telle lentille ophtalmique peut avoir une épaisseur inférieure à 1,2 mm dans une zone centrale de celui-ci, voire sensiblement égale à 1,1 mm.

Selon une première méthode d'application la structure en couches 30 est appliquée sur la face antérieure convexe 21 de la lentille 20 à titre d'exemple pour illustrer cette première méthode d'application, mais la structure 30 peut être appliquée de façon similaire sur la face postérieure concave 22 de la lentille.

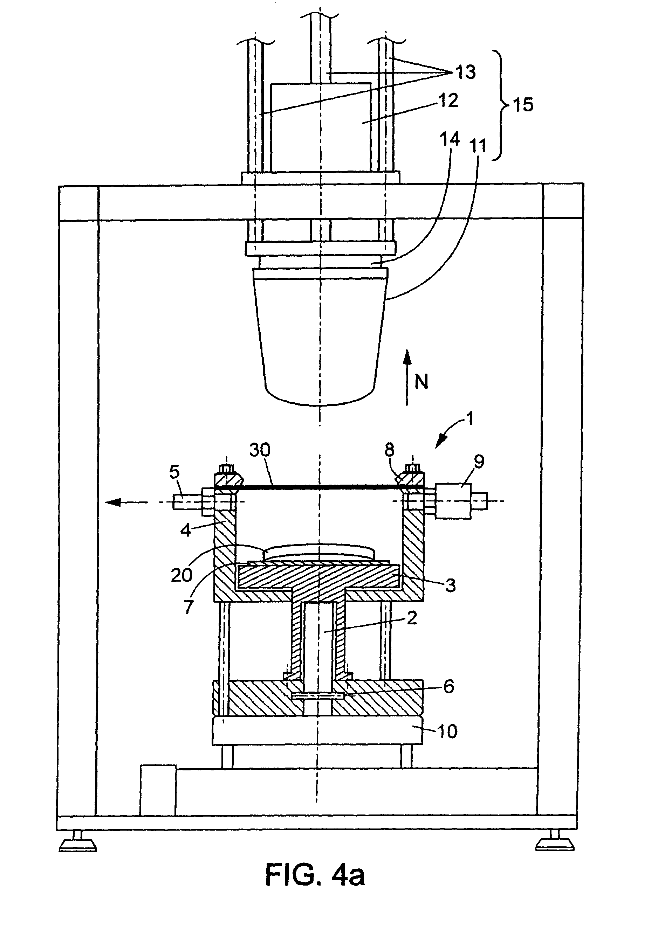

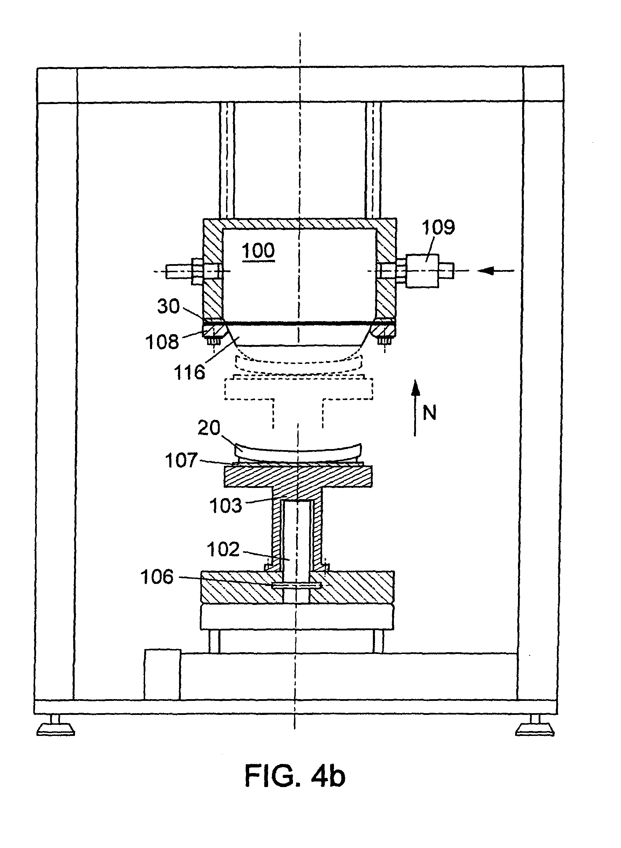

Pour cela, un dispositif tel que décrit dans la demande de brevet FR/05 03306 et illustré sur la figure 4a peut être utilisé. Un tel dispositif comprend une enceinte à basse pression 1 et un système d'application 15 disposé au dessus de l'enceinte par l'intermédiaire d'une structure rigide.

L'enceinte à basse pression 1 comprend elle-même une paroi latérale 4, par exemple cylindrique d'axe vertical. Elle est munie d'un anneau de serrage 8, pour maintenir fixement une membrane sur le bord périphérique supérieur la paroi 4. L'enceinte 1 est ainsi fermée de manière étanche sur sa face supérieure. L'enceinte 1 est disposée au dessus d'une embase 10, à une hauteur fixe. Un cylindre 2 d'axe vertical et un piston 3 qui traverse la face inférieure de l'enceinte 1 permettent de déplacer verticalement un porte-élément 7 à l'intérieur de l'enceinte 1. Un système de blocage 6 permet de fixer la hauteur du porte-élément 7, et la paroi 4 est munie d'un orifice d'admission gazeuse 9, ainsi que d'un orifice d'aspiration 5. L'orifice 5 est connecté à une unité de pompage non représentée.

Le système d'application 15 comprend un tampon 11 monté sur des glissières verticales 13, et déplaçable au moyen d'un système de déplacement 12. Un tel système de déplacement peut comprendre un moteur pas-à-pas qui entraîne une vis de translation, par exemple. Un détecteur de pression 14, qui peut comprendre un élément piézoélectrique, permet de mesurer une force d'application du tampon contre la membrane de fermeture de l'enceinte 1.

La structure en couches 30 est fixée sur l'enceinte 1 au moyen de l'anneau 8. Elle est orientée de sorte que la couche de matériau adhésif 36 est tournée vers l'intérieur de l'enceinte 1, conformément à la direction verticale orientée N qui est indiquée sur les figures 1b et 4a. A ce moment, si la structure 30 comporte une pellicule 37 de recouvrement de la couche 36, cette pellicule 37 est retirée, par exemple par pelage, de façon à découvrir le matériau adhésif de la couche 36.

La lentille 20 est fixée sur le porte-élément 7, de sorte que sa face 21 est orientée vers le haut.

L'application de la structure à couches 30 sur la lentille 20 peut alors être effectuée en rapprochant l'un de l'autre la structure 30 et la lentille20 en plusieurs étapes.

Lors d'une première étape, le tampon 11 est descendu de façon à repousser une partie centrale de la structure 30 vers l'intérieur de l'enceinte 1. Etant donné que la structure 30 est maintenue fermement sur sa périphérie par l'anneau 8, la structure 30 est déformée et prend une forme courbe, qui correspond à celle de l'extrémité inférieure du tampon 11. Lorsque la structure 30 présente un comportement plastique, cette première étape constitue un préformage de la structure en couches, de sorte que celle-ci peut ensuite être appliquée régulièrement sur la surface courbe 21 de la lentille 20.

Lors d'une seconde étape, la lentille 20 est approché de la structure en couches 30 en créant une dépression entre ceux-ci, à l'intérieur de l'enceinte 1. Le piston 3 monte au fur et à mesure qu'un gaz initialement présent dans l'enceinte 1 est aspiré par l'orifice 5. Lorsqu'un contact ponctuel est réalisé entre la structure en couches 30 et la surface 21 de la lentille 20, la hauteur du piston 3 est alors fixée au moyen du système de blocage 6.

Enfin, lors d'une troisième étape, le tampon 11 est de nouveau descendu en le pressant sur la structure en couches 30, d'un côté de celle-ci opposé à la lentille 20. De cette façon, la structure 30 est appliquée sur toute la surface 21 de la lentille 20, avec la couche de matériau adhésif 36 serrée entre celles-ci. L'extrémité du tampon 11 est de préférence constituée d'un matériau souple, de façon à obtenir une application régulière de la structure 30 sur toute la surface 21 de la lentille.

Le tampon 11 est alors remonté, l'aspiration au sein de l'enceinte 1 est arrêtée et l'anneau 8 est débloqué. La lentille 20 est retirée du dispositif avec la structure 30 collée au travers de la couche adhésive 36, sur sa face convexe, en épousant parfaitement la géométrie de l'élément optique de base, Eventuellement, une nouvelle irradiation de la couche 35 peut être effectuée, avec une énergie de rayonnement UV-A comprise entre 0,5 et 5,0 J, pour terminer la polymérisation du système globale. Une telle polymérisation de l'ensemble du système permet de bénéficier d'un comportement mécanique adapté de la structure 30 pendant son application sur la lentille ophtalmique. Une telle irradiation finale peut aussi permettre de renforcer la stabilité du système du fait d'une augmentation du taux de conversion des éléments constitutifs.

Une lentille ophtalmique polarisant qui présente une efficacité de polarisation élevée est alors obtenu, et qui présente une qualité optique satisfaisante. En particulier, les inventeurs ont constaté que l'application de la structure 30 sur la lentille 20 ne perturbe pas l'orientation des colorants dichroïques à l'intérieur de la couche 35.

En outre, l'utilisation d'une dépression à l'intérieur de l'enceinte 1 pendant l'application de la structure 30 sur le verre 20 contribue à éviter qu'une bulle gazeuse soit emprisonnée involontairement, entre la structure en couches et le verre.

Lorsque la structure en couches 30 comprend une couche fonctionnelle 33 située, au sein de la structure, d'un côté opposé à la couche de matériau adhésif 36, la couche 33 est située à la surface du verre polarisant obtenu, d'un côté opposé au verre 20 par rapport aux couches 34 et 35. Une telle configuration est adaptée lorsque la couche 33 possède une fonction de protection contre un rayonnement UV, une fonction de protection mécanique, une fonction antireflet ou une fonction anti-salissure.

II est entendu que de nombreuses modifications peuvent être introduites dans les exemples de mise en oeuvre de l'invention qui ont été décrits en détail ci-dessus, tout en conservant certains au moins des avantages de l'invention. De telles modifications peuvent permettre, notamment, d'adapter ces exemples à des utilisations particulières de l'élément optique, ou à des éléments optiques autres qu'un verre ophtalmique. En particulier, la portion de matériau adhésif qui assure la fixation de la structure à couches sur l'élément optique de base peut être disposée initialement sur cet élément, sur la face de celui-ci qui est destinée à recevoir la structure en couches.

## Revendications

1. Procédé de réalisation d'un élément optique polarisant par application d'une structure en couches (30) sur une surface pseudo-sphérique d'un élément optique de base (20), la structure comprenant une première couche d'orientation (34) et une seconde couche polarisante comprenant elle-même des polymères à cristaux liquides et au moins un colorant dichroïque (35), ledit colorant dichroïque ayant une orientation angulaire déterminée par la première couche, le procédé comprenant les étapes suivantes :
/a/ réaliser la structure en couches (30) sur un support temporaire (31), ladite étape /a/ comprenant les sous-étapes suivantes :
/a1/ former, sur ledit support temporaire (31), une première couche (34) à base de polymères photo-orientables présentant des groupes photo-réactifs ;
/a2/ polymériser ladite première couche (34) sous un premier rayonnement ultraviolet polarisé linéairement, de façon à réaliser un réseau de polymère photo-orienté selon une direction imposée par la direction de polarisation dudit premier rayonnement ultraviolet ;
/a3/ former, sur ladite première couche (34), une seconde couche (35) comprenant un mélange des colorants dichroïques avec au moins un cristal liquide monomérique réticulable, ceux-ci étant orientés angulairement par la première couche (34) ; et
/a4/ polymériser au moins en partie les cristaux liquides monomériques de la seconde couche (35), de façon à fixer les colorants dichroïques dans l'orientation angulaire déterminée par la première couche, en utilisant une dose d'un second rayonnement ultraviolet ajustée de sorte que ladite seconde couche (35) est sous-polymérisée et possède une température de transition vitreuse inférieure ou égale à une température ambiante qui peut varier de plus ou moins 5°C ;
/b/ retirer la structure en couches (30) du support temporaire (31), de façon à obtenir la structure sous forme d'une membrane auto-supportée ; et
/c/ appliquer la structure en couches (30) sur la surface pseudo-sphérique de l'élément optique de base (20).

2. Procédé selon la revendication 1, suivant lequel la seconde couche (35) possède une épaisseur comprise entre 3 et 100 µm, préférentiellement entre 5 et 50 µm, et très préférentiellement entre 5 et 10 µm.

3. Procédé selon l'une quelconque des revendications précédentes, comprenant une étape de polymérisation supplémentaire de la seconde couche (35), effectuée après l'étape /c/, de façon à terminer la polymérisation du cristal liquide monomérique.

4. Procédé selon l'une quelconque des revendications précédentes, suivant lequel la structure en couches (30) est réalisée à l'étape /a/ sous forme d'un film continu, puis optionnellement découpée en segments destinés à être appliqués sur des éléments optiques de base distincts (20).

5. Procédé selon l'une quelconque des revendications précédentes, suivant lequel le support temporaire (31) présente une énergie de surface comprise entre 25 mN/m et 40 mN/m, préférentiellement entre 30 mN/m et 35 mN/m.

6. Procédé selon la revendication 5, suivant lequel le support temporaire (31) est à base d'un matériau sélectionné parmi le polyéthylène et le polypropylène.

7. Procédé selon l'une quelconque des revendications précédentes, suivant lequel, l'étape /a/ comprend en outre la réalisation d'une couche de pelage (32) sur le support temporaire (31), entre la structure en couches (30) et ledit support temporaire.

8. Procédé selon la revendication 7, suivant lequel la couche de pelage (32) comprend un composé tensio-actif à base de silicone.

9. Procédé selon l'une quelconque des revendications précédentes, suivant lequel l'étape /a/ comprend en outre la réalisation, sur le support temporaire (31), d'au moins une troisième couche (33) sélectionnée parmi une couche de protection contre un rayonnement UV, une couche barrière à l'oxygène, une couche anti-abrasion, une couche anti-choc, un revêtement antireflet, un revêtement anti-statique et un revêtement antisalissure, ladite troisième couche faisant partie de la structure (30) en forme de membrane auto-supportée obtenue à l'étape /b/, et étant située à l'issue de l'étape /c/ d'un côté desdites première (34) et seconde (35) couches opposé à l'élément optique (20).

10. Procédé selon l'une quelconque des revendications précédentes, suivant lequel, à l'étape /c/, la structure en couches (30) est appliquée sur la surface de l'élément optique de base (20) avec une portion d'un matériau adhésif (36) disposée entre ladite structure et ledit élément optique.

11. Procédé selon la revendication 10, suivant lequel la portion de matériau adhésif (36) est disposée avant l'étape /c/ sous forme d'une couche sur une face de l'élément optique et/ou sous forme d'une couche supplémentaire de la structure en couches (30).

12. Procédé selon la revendication 10, suivant lequel la portion de matériau adhésif (36) est disposée avant l'étape /c/ sous forme d'une couche supplémentaire de la structure en couches (30), sur un côté desdites première (34) et deuxième (35) couches.

13. Procédé selon la revendication 12, suivant lequel la couche de matériau adhésif (36) est recouverte d'une pellicule (37) au sein de la structure à couches (30), ladite pellicule étant retirée avant l'étape /c/.

14. Procédé selon l'une des revendications 10 à 13, suivant lequel le matériau adhésif est choisi parmi les adhésifs sensibles à la pression, et suivant lequel la portion dudit matériau adhésif (36) est disposée avant l'étape /c/ sous forme d'une couche présentant une épaisseur comprise entre 0,5 et 200 µm.

15. Procédé selon l'une quelconque des revendications 1 à 14, comprenant en outre, entre les étapes /b/ et /c/, une étape de préformage de la structure en couches (30) effectuée de sorte que ladite structure présente une forme de membrane courbe.

16. Procédé selon la revendication 15, dans lequel l'étape /c/ comprend les sous-étapes suivantes :
/c1 / approcher l'élément optique de base (20) de la structure en couches (30) de façon à réaliser un contact ponctuel entre ladite structure et la surface dudit élément optique ; et
/c2/ presser la structure en couches (30) contre l'élément optique de base (20), de façon à appliquer ladite structure sur toute la surface dudit élément optique.

17. Procédé selon la revendication 16, suivant lequel l'étape /c1/ est exécutée en créant une dépression entre l'élément optique de base (20) et la structure en couches (30).

18. Procédé selon la revendication 16 ou 17, suivant lequel l'étape /c2/ est exécutée en pressant un tampon (11) sur la structure en couches (30), d'un côté de ladite structure opposé à l'élément optique de base (20).

19. Procédé selon l'une quelconque des revendications 1 à 14, suivant lequel l'étape /c/ est exécutée en exerçant une surpression fluide sur la structure en couches (30), d'un côté de ladite structure opposé à l'élément optique de base (20).

20. Procédé selon l'une quelconque des revendications précédentes, suivant lequel l'élément optique de base (20) comprend un élément d'instrument de visée, un élément d'instrument de mesure, une lentille ophtalmique ou une visière de casque.

21. Procédé selon la revendication 20, suivant lequel l'élément optique de base (20) représente une lentille ophtalmique.

22. Procédé selon la revendication 21, suivant lequel l'élément optique de base (20) représente une lentille ophtalmique, avec un substrat de ladite lentille ayant un indice de réfraction supérieur à 1,60.

## Patentansprüche

1. Verfahren zum Herstellen eines optischen Polarisationselements durch Anwenden einer Schichtstruktur (30) auf eine pseudosphärische Oberfläche eines optischen Basiselements (20), wobei die Struktur eine erste orientierende Schicht (34) und eine zweite polarisierende Schicht, die ihrerseits Flüssigkristallpolymere und wenigstens einen dichroitischen Farbstoff (35) enthält, umfasst, wobei der dichroitische Farbstoff eine durch die erste Schicht bestimmte Winkelorientierung besitzt, wobei das Verfahren die folgenden Schritte umfasst:
/a/ Herstellen der Schichtstruktur (30) auf einem vorläufigen Träger (31), wobei der Schritt /a/ die folgenden Unterschritte umfasst:
/a1/ Bilden einer ersten Schicht (34) auf der Basis von photoorientierbaren Polymeren, die photoreaktive Gruppen aufweisen, auf dem vorläufigen Träger (31) ;
/a2/ Polymerisieren der ersten Schicht (34) unter einer ersten linear polarisierten Ultraviolettstrahlung, derart, dass ein Polymernetz hergestellt wird, das in einer Richtung, die durch die Polarisationsrichtung der ersten Ultraviolettstrahlung vorgegeben ist, photoorientiert ist;
/a3/ Bilden einer zweiten Schicht (35), die ein Gemisch aus dichroitischen Farbstoffen mit wenigstens einem vernetzbaren Monomer-Flüssigkristall, der durch die erste Schicht (34) in Winkelrichtung orientiert wird, enthält, auf der ersten Schicht (34); und
/a4/ wenigstens teilweises Polymerisieren der Monomer-Flüssigkristalle der zweiten Schicht (35), derart, dass die dichroitischen Farbstoffe in der durch die erste Schicht bestimmten Winkelorientierung fixiert werden, indem eine Dosis einer zweiten Ultraviolettstrahlung verwendet wird, die in der Weise eingestellt ist, dass die zweite Schicht (35) unterpolymerisiert wird und eine Glasübergangstemperatur kleiner oder gleich einer Umgebungstemperatur, die um 5 °C variieren kann, besitzt;
/b/ Abziehen der Schichtstruktur (30) von dem vorläufigen Träger (31), derart, dass die Struktur in Form einer selbsttragenden Membran erhalten wird; und
/c/ Aufbringen der Schichtstruktur (30) auf die pseudosphärische Oberfläche des optischen Basiselements (20).

2. Verfahren nach Anspruch 1, wobei die zweite Schicht (35) eine Dicke im Bereich von 3 bis 100 µm, vorzugsweise von 5 bis 50 µm und µm stärksten bevorzugt von 5 bis 10 µm, besitzt.

3. Verfahren nach einem der vorhergehenden Ansprüche, das einen Schritt des zusätzlichen Polymerisierens der zweiten Schicht (35) umfasst, der nach dem Schritt /c/ ausgeführt wird, derart, dass die Polymerisation des Monomer-Flüssigkristalls beendet wird.

4. Verfahren nach einem der vorhergehenden Ansprüche, wobei die Schichtstruktur (30) im Schritt /a/ in Form einer ununterbrochenen dünnen Schicht verwirklicht wird, die dann optional in Segmente zerschnitten wird, die dazu bestimmt sind, auf verschiedene optische Basiselemente (20) aufgebracht zu werden.

5. Verfahren nach einem der vorhergehenden Ansprüche, wobei der vorläufige Träger (31) eine Oberflächenenergie im Bereich von 25 mN/m bis 40 mN/m, vorzugsweise von 30 mN/m bis 35 mN/m, aufweist.

6. Verfahren nach Anspruch 5, wobei der vorläufige Träger (31) ein Material, das aus Polyethylen und Polypropylen gewählt ist, als Basis hat.

7. Verfahren nach einem der vorhergehenden Ansprüche, wobei der Schritt /a/ außerdem das Herstellen einer Abziehschicht (32) auf dem vorläufigen Träger (31) zwischen der Schichtstruktur (30) und dem vorläufigen Träger umfasst.

8. Verfahren nach Anspruch 7, wobei die Abziehschicht (32) einen oberflächenaktiven Verbund auf Silikonbasis umfasst.

9. Verfahren nach einem der vorhergehenden Ansprüche, wobei der Schritt /a/ außerdem das Herstellen auf dem vorläufigen Träger (31) wenigstens einer dritten Schicht (33), die aus einer Schicht zum Schutz vor UV-Strahlung, einer Sauerstoffsperrschicht, einer Antiabriebschicht, einer Antistoßschicht, einer antireflektierenden Beschichtung, einer antistatischen Beschichtung und einer Anwuchsverhinderungsbeschichtung gewählt ist, umfasst, wobei die dritte Schicht einen Teil der Struktur (30) in Form einer selbsttragenden Membran, die im Schritt /b/ erhalten wird, bildet und sich am Ende des Schrittes /c/ auf der einen Seite der ersten (34) und der zweiten (35) Schicht gegenüber dem optischen Element (20) befindet.

10. Verfahren nach einem der vorhergehenden Ansprüche, wobei im Schritt /c/ die Schichtstruktur (30) auf die Oberfläche des optischen Basiselements (20) aufgebracht wird, wobei ein Anteil eines Klebstoffmaterials (36) zwischen der Struktur und dem optischen Element angeordnet ist.

11. Verfahren nach Anspruch 10, wobei der Anteil des Klebstoffmaterials (36) vor dem Schritt /c/ in Form einer Schicht auf einer Fläche des optischen Elements und/oder in Form einer zusätzlichen Schicht der Schichtstruktur (30) angeordnet wird.

12. Verfahren nach Anspruch 10, wobei der Anteil des Klebstoffmaterials (36) vor dem Schritt /c/ in Form einer zusätzlichen Schicht der Schichtstruktur (30) auf einer Seite der ersten (34) und der zweiten (35) Schicht angeordnet wird.

13. Verfahren nach Anspruch 12, wobei die Klebstoffmaterialschicht (36) mit einer Haut (37) innerhalb der Schichtstruktur (30) überzogen ist, wobei die Haut vor dem Schritt /c/ abgezogen wird.

14. Verfahren nach einem der Ansprüche 10 bis 13, wobei das Klebstoffmaterial aus den druckempfindlichen Klebstoffen gewählt ist und wobei der Anteil des Klebstoffmaterials (36) vor dem Schritt /c/ in Form einer Schicht, die eine Dicke im Bereich von 0,5 bis 200 µm aufweist, angeordnet wird.

15. Verfahren nach einem der Ansprüche 1 bis 14, das außerdem zwischen den Schritten /b/ und /c/ einen Schritt des Vorformens der Schichtstruktur (30) umfasst, der in der Weise ausgeführt wird, dass die Struktur die Form einer gekrümmten Membran hat.

16. Verfahren nach Anspruch 15, wobei der Schritt /c/ die folgenden Unterschritte umfasst:
/c1/ Annähern des optischen Basiselements (20) an die Schichtstruktur (30), derart, dass ein Punktkontakt zwischen der Struktur und der Oberfläche des optischen Elements verwirklicht wird; und
/c2/ Pressen der Schichtstruktur (30) gegen das optische Basiselement (20), derart, dass die Struktur auf die gesamte Oberfläche des optischen Elements aufgebracht wird.

17. Verfahren nach Anspruch 16, wobei der Schritt /c1/ dadurch ausgeführt wird, dass zwischen dem optischen Basiselement (20) und der Schichtstruktur (30) eine Vertiefung erzeugt wird.

18. Verfahren nach Anspruch 16 oder 17, wobei der Schritt /c2/ dadurch ausgeführt wird, dass gegen die Schichtstruktur (30) von einer Seite der Struktur gegenüber dem optischen Basiselement (20) ein Dämpfungsmaterial (11) gepresst wird.

19. Verfahren nach einem der Ansprüche 1 bis 14, wobei der Schritt /c/ dadurch ausgeführt wird, dass ein Fluidüberdruck auf die Schichtstruktur (30) von einer Seite der Struktur gegenüber dem optischen Basiselement (20) ausgeübt wird.

20. Verfahren nach einem der vorhergehenden Ansprüche, wobei das optische Basiselement (20) ein Visierinstrument-Element, ein Messinstrument-Element, eine ophthalmische Linse oder ein Helmvisier umfasst.

21. Verfahren nach Anspruch 20, wobei das optische Basiselement (20) eine ophthalmische Linse darstellt.

22. Verfahren nach Anspruch 21, wobei das optische Basiselement (20) eine ophthalmische Linse darstellt, wobei ein Substrat der Linse einen Brechungsindex größer als 1,60 besitzt.

## Claims

1. Method for producing a polarizing optical element by applying a multilayer structure (30) onto a pseudospherical surface of a base optical element (20), the structure comprising an orienting first layer (34) and a polarizing second layer itself comprising liquid crystal polymers and at least one dichroic dye (35), said dichroic dye having an angular orientation determined by the first layer, the method comprising the following steps:
(a) producing the multilayer structure (30) on a temporary support (31), said step (a) comprising the following substeps:
(a1) forming, on said temporary support (31), a first layer (34) based on photoorientable polymers having photoreactive groups;
(a2) curing said first layer (34) under a first linearly polarized ultraviolet radiation, so as to produce a polymer network that is photooriented along a direction imposed by the polarization direction of said first ultraviolet radiation;
(a3) forming, on said first layer (34), a second layer (35) comprising a mixture of dichroic dyes with at least one crosslinkable liquid crystal monomer, these being angularly oriented by the first layer (34); and
(a4) at least partly curing the liquid crystal monomers of the second layer (35), so as to fix the dichroic dyes in the angular orientation determined by the first layer, while using a dose of a second ultraviolet radiation adjusted so that said second layer (35) is undercured and has a glass transition temperature less than or equal to a room temperature which may vary by plus or minus 5°C;
(b) removing the multilayer structure (30) from the temporary support (31), so as to obtain the structure in the form of a self-supported membrane; and
(c) applying the multilayer structure (30) onto the pseudospherical surface of the base optical element (20).

2. Method according to Claim 1, in which the second layer (35) has a thickness between 3 and 100 µm, preferentially between 5 and 50 µm, and most preferentially between 5 and 10 µm.

3. Method according to either one of the preceding claims, comprising an additional step for curing the second layer (35), carried out after step (c), so as to terminate the cure of the liquid crystal monomer.

4. Method according to any one of the preceding claims, in which the multilayer structure (30) is produced in step (a) in the form of a continuous film, then optionally cut into segments intended to be applied onto different base optical elements (20).

5. Method according to any one of the preceding claims, in which the temporary support (31) has a surface energy between 25 mN/m and 40 mN/m, preferentially between 30 mN/m and 35 mN/m.

6. Method according to claim 5, in which the temporary support (31) is based on a material chosen from polyethylene and polypropylene.

7. Method according to any one of the preceding claims, in which step (a) comprises, in addition, the production of a peel layer (32) on the temporary support (31), between the multilayer structure (30) and said temporary support.

8. Method according to Claim 7, in which the peel layer (32) comprises a silicone-based surfactant.

9. Method according to any one of the preceding claims, in which step (a) comprises, in addition, the production, on the temporary support (31), of at least a third layer (33) chosen from a UV radiation protective layer, an oxygen barrier layer, an abrasion-resistant layer, an impact-resistant layer, an antireflection coating, an antistatic coating and an antisoiling coating, said third layer making part of the structure (30) in the form of a self-supported membrane obtained in step (b), and being located at the end of step (c) on one side of said first (34) and second (35) layers opposite to the optical element (20).

10. Method according to any one of the preceding claims, in which, in step (c), the multilayer structure (30) is applied onto the surface of the base optical element (20) with a portion of an adhesive (36) placed between said structure and said optical element.

11. Method according to Claim 10, in which the portion of adhesive (36) is placed before step (c) in the form of a layer on one side of the optical element and/or in the form of an additional layer of the multilayer structure (30).

12. Method according to Claim 10, in which the portion of adhesive (36) is placed before step (c) in the form of an additional layer of the multilayer structure (30), on one side of said first (34) and second (35) layers.

13. Method according to Claim 12, in which the layer of adhesive (36) is covered with a liner (37) within the multilayer structure (30), said liner being removed before step (c).

14. Method according to one of Claims 10 to 13, in which the adhesive is chosen from pressure-sensitive adhesives, and in which the portion of said adhesive (36) is placed before step (c) in the form of a layer having a thickness between 0.5 and 200 µm.

15. Method according to any one of Claims 1 to 14, comprising, in addition, between steps (b) and (c), a step for performing the multilayer structure (30) carried out so that said structure has a curved membrane shape.

16. Method according to Claim 15, in which the step (c) comprises the following substeps:
(c1) moving the base optical element (20) nearer to the multilayer structure (30) so as to produce a point contact between said structure and the surface of said optical element; and
(c2) pressing the multilayer structure (30) against the base optical element (20), so as to apply said structure onto the whole of the surface of said optical element.

17. Method according to Claim 16, in which the step (c1) is carried out by creating a vacuum between the base optical element (20) and the multilayer structure (30).

18. Method according to Claim 16 or 17, in which the step (c2) is carried out by pressing a pad (11) onto the multilayer structure (30), on the side of said structure opposite to the base optical element (20).

19. Method according to any one of Claims 1 to 14, in which the step (c) is carried out by exerting a variable overpressure on the multilayer structure (30), on the side of said structure opposite to the base optical element (20).

20. Method according to any one of the preceding claims, in which the base optical element (20) comprises a sighting instrument element, a measurement instrument element, an ophthalmic lens or a helmet visor.

21. Method according to Claim 20, in which the base optical element (20) represents an ophthalmic lens.

22. Method according to Claim 21, in which the base optical element (20) represents an ophthalmic lens, with one substrate of said lens having a refractive index greater than 1.60.
